# EUROPÄISCHE PATENTSCHRIFT

(11) **EP 3 227 041 B1**
(45) Veröffentlichungstag und Bekanntmachung des Hinweises auf die Patenterteilung: **24.07.2019**
(21) Anmeldenummer: 15808365.9
(22) Anmeldetag: 27.11.2015
(51) Int. Cl.: B23B 31/02, B23B 31/30, B23B 31/103, B23B 31/107

(54) **SPANNFUTTER**
CLAMPING CHUCK
MANDRIN DE SERRAGE

(30) Priorität: 01.12.2014 DE 102014224561
(43) Veröffentlichungstag der Anmeldung: 11.10.2017
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Kordel, Mattias
(86) Internationale Anmeldenummer: PCT/EP2015/077976
(87) Internationale Veröffentlichungsnummer: WO 2016/087333

(56) Entgegenhaltungen:
- EP-B1- 1 605 837
- DE-A1- 3 934 610
- DE-A1- 19 714 398
- DE-B3-102011 106 421
- US-A- 2 135 861
- US-A- 2 167 014
- US-A- 4 577 875
- US-A1- 2015 202 689
- US-B1- 6 270 085
- US-B1- 6 953 196

## Beschreibung

Die Erfindung betrifft ein Spannfutter gemäß Oberbegriff des Anspruchs 1. Ein derartiges Spannfutter ist zum Beispiel aus dem Dokument US 2 167 014 A bekannt.

Spannfutter der hier angesprochenen Art sind bekannt. Sie weisen einen Kupplungsabschnitt auf, der dazu dient, das Spannfutter mit einer Werkzeugmaschine unmittelbar oder über Adapter, Zwischenstücke oder dergleichen drehfest zu verbinden, und um ein Drehmoment in das Spannfutter und in ein von diesem gehaltenes Werkzeug einzuleiten. Die genannten Spannfutter weisen einen mit einer Ausnehmung versehenen Aufnahmeabschnitt auf, in welchen ein Werkzeug eingesetzt und auf bekannte Weise festgespannt werden kann. Das Werkzeug wird mittels einer Sicherungseinrichtung in dem Aufnahmeabschnitt gehalten und axial festgelegt. Dadurch soll erreicht werden, dass das Werkzeug auch bei hoher Belastung nicht aus dem Aufnahmeabschnitt axial herausgezogen werden kann. Spannfutter der hier angesprochenen Art weisen außerdem eine Vorspanneinrichtung auf, welche ein in den Aufnahmeabschnitt eingesetztes Werkzeug mit einer axialen Kraft beaufschlagt, das heißt mit einer Vorspannkraft, welche versucht, das Werkzeug aus der Ausnehmung des Aufnahmeabschnitts heraus zu drängen und gegen die Sicherungseinrichtung anlegt. Derartige Vorspanneinrichtungen dienen dazu, das Werkzeug derart gegen die Sicherungseinrichtung anzudrücken, dass es nach dem Einbringen in den Aufnahmeabschnitt eine definierte axiale Position einnimmt, in welcher es auf geeignete und bekannte Weise im Aufnahmeabschnitt festgespannt wird. Bekannte Sicherungseinrichtungen weisen beispielsweise eine mit dem in den Aufnahmeabschnitt eingebrachten Werkzeug zusammenwirkende Spannschraube auf, welche den Grundkörper des Spannfutters durchläuft und bis in die Ausnehmung des Aufnahmeabschnitts eingeschraubt werden kann, um mit dem Werkzeug in Eingriff zu treten. Andere Sicherungseinrichtungen weisen mindestens einen Stift auf, der das Spannfutter im Aufnahmeabschnitt im Wesentlichen quer zu dessen Längserstreckung durchgreift und dabei in einer seitlichen Ausnehmung des Werkzeugs angeordnet ist. Mittels der Vorspanneinrichtung wird das Werkzeug gegen die Spannschraube oder den mindestens einen Stift angepresst, um die gewünschte axiale Ausgangslage zu erreichen. Bekannte Vorspanneinrichtungen weisen mindestens ein Federelement auf, sei es mindestens eine Federscheibe oder vorzugsweise eine insbesondere als Schraubenfeder ausgebildete Feder, die sich einerseits am Grundkörper des Spannfutters und andererseits an dem in die Ausnehmung des Aufnahmeabschnitts eingebrachten Ende des Werkzeugs abstützt. Das Werkzeug muss innerhalb der Ausnehmung des Aufnahmeabschnitts beim Einsetzen meist gedreht werden, um eine seitliche Vertiefung im Werkzeug mit der Spannschraube oder dem Stift der Sicherungseinrichtung in Eingriff bringen zu können. Dabei wird das Federelement, sei es eine Federlatte, insbesondere aber eine Schraubenfeder, sehr beansprucht, weil das Federelement einerseits durch Reibungskräfte am Grund der Ausnehmung des Aufnahmeabschnitts und andererseits durch Reibungskräfte am gegenüberliegenden Ende am Ende des Werkzeugs mit einem Drehmoment beaufschlagt wird. Dies kann zum Ausfall, jedenfalls zur Beeinträchtigung der Federwirkung des Federelements führen.

Aufgabe der Erfindung ist es daher, ein Spannfutter zu schaffen, welches diesen Nachteil vermeidet.

Zur Lösung dieser Aufgabe wird ein Spannfutter vorgeschlagen, welches die in Anspruch 1 genannten Merkmale aufweist und sich dadurch auszeichnet, dass die Vorspanneinrichtung in die Ausnehmung einschraubbar ist, wobei die Vorspanneinrichtung ein erstes Gehäuseelement und ein in dieses einsetzbares und gegenüber diesem verschiebliches zweites Gehäuseelement aufweist, wobei die beiden Gehäuseelemente einen Hohlraum umgrenzen, der ein Federelement aufnimmt. Dieses ist unter Vorspannung in den Hohlraum eingesetzt, sodass es eine Kraft beziehungsweise Vorspannkraft erzeugt, welche die beiden Gehäuseelemente auseinanderdrängt. Eine Sperreinrichtung der Vorspanneinrichtung verhindert dabei eine ungewollte Trennung der beiden Gehäuseelemente.

Ein Ausführungsbeispiel des Spannfutters wird deshalb bevorzugt, weil dessen erstes Gehäuseelement einen Grundkörper mit einem ringförmigen, vorzugsweise zylindrischen, Wandabschnitt aufweist, der den Hohlraum umgibt und mit einem nach innen, also in den Hohlraum vorspringenden Widerlager für ein erstes Ende des Federelements versehen ist. Diese Ausgestaltung führt zu einem sehr einfachen und damit störungsunanfälligen Aufbau der Vorspanneinrichtung.

Bei einem weiteren bevorzugten Ausführungsbeispiel des Spannfutters ist vorgesehen, dass das erste Gehäuseelement ein Außengewinde aufweist. Dieses kann also auf einfache Weise im Spannfutter beziehungsweise dessen Aufnahmeabschnitt befestigt werden.

Bei einem weiteren bevorzugten Ausführungsbeispiel des Spannfutters ist vorgesehen, dass das erste Gehäuseelement einen umlaufenden Kragen aufweist. Diese Ausgestaltung führt dazu, dass auf einfache Weise eine definierte axiale Ausgangslage für die Vorspanneinrichtung vorgebbar ist, damit auch für deren Vorspannkräfte.

Ein weiteres Ausführungsbeispiel des Spannfutters wird bevorzugt, weil dessen zweites Gehäuseelement einen Grundkörper mit einem ringförmigen, vorzugsweise zylindrischen, Wandabschnitt aufweist, der zumindest bereichsweise in dem vom ersten Wandabschnitt umgebenden Hohlraum einführbar ist und diesen ebenfalls umgibt. Der Grundkörper weist überdies ein nach innen, also in den Hohlraum vorspringendes Widerlager für ein zweites Ende des Federelements auf. Die Vorspanneinrichtung zeichnet sich nach allem durch einen sehr einfachen Aufbau aus, der eine hohe Funktionssicherheit und kostengünstige Herstellbarkeit gewährleistet.

Weitere Ausgestaltungen ergeben sich aus den übrigen Unteransprüchen.

Die Erfindung wird im Folgenden anhand der Zeichnung näher erläutert. Es zeigen:
- Figur 1: eine Prinzipskizze eines Spannfutters im Längsschnitt,
- Figur 2: eine Vorspanneinrichtung des Spannfutters gemäß Figur 1 in einer ersten Längsschnittdarstellung,
- Figur 3: eine Vorspanneinrichtung des Spannfutters nach Figur 1 in einer zweiten Längsschnittdarstellung,
- Figur 4: eine Vorspanneinrichtung des Spannfutter nach Figur 1 in perspektivischer Ansicht und
- Figur 5: eine Unteransicht der Vorspanneinrichtung des Spannfutters nach Figur 1.

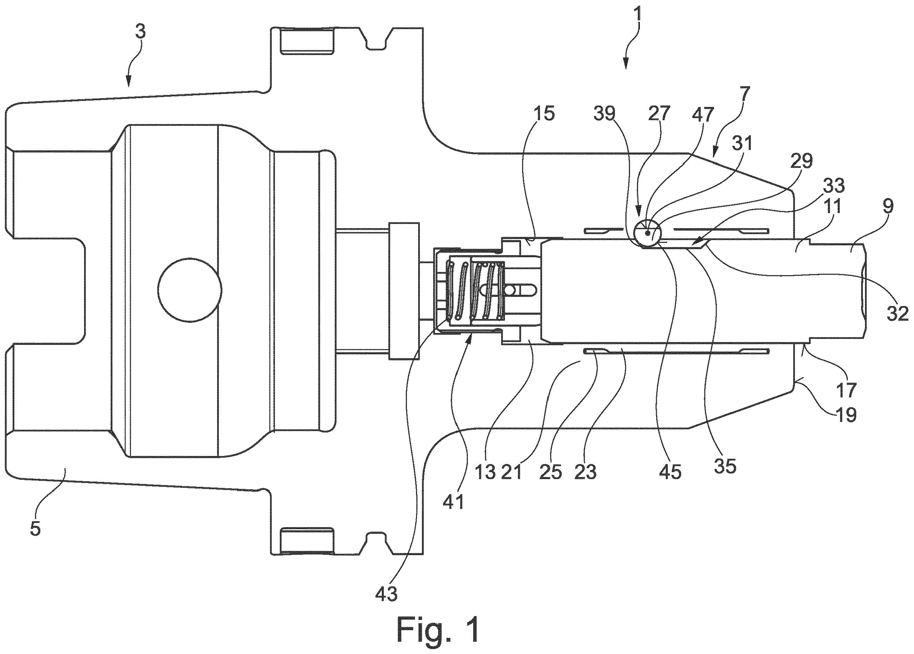

Figur 1 zeigt in einer Prinzipskizze ein Spannfutter 1 im Längsschnitt, welches einen Kupplungsabschnitt 3 aufweist, über den das Spannfutter 1 mit einer Werkzeugmaschine drehfest koppelbar ist. Dabei können zwischen Werkzeugmaschine und Spannfutter 1 auch Zwischenstücke, Adapter oder dergleichen vorgesehen sein. Der Kupplungsabschnitt 3 weist hier beispielhaft einen Hohlkegel 5 auf, der in eine entsprechende Aufnahme zur Halterung des Spannfutters einführbar ist. Hohlkegel der hier angesprochenen Art sind bekannt, sodass auf deren Ausgestaltung und Funktionsweise nicht näher eingegangen wird. Es sei hier aber festgehalten, dass statt eines Hohlkegels auch zylindrische Ansätze oder als Vollkörper ausgebildete Steilkegel verwendet werden können.

Das Spannfutter 1 weist außerdem einen Aufnahmeabschnitt 7 auf, der dazu dient, ein Werkzeug 9 im Spannfutter 1 aufzunehmen und auf geeignete Weise zu fixieren. Dabei kann das Werkzeug 9, wie hier dargestellt, einen zylindrischen Schaft 11 aufweisen, der in eine im Aufnahmeabschnitt 7 vorgesehene Ausnehmung 13 einsetzbar ist. Der Aufnahmeabschnitt 7 kann beispielsweise als Schrumpffutter ausgebildet sein, dessen Aufbau und Funktionsweise bekannt ist. Insbesondere ist bekannt, dass bei derartigen Futtern das Werkzeug erst nach Erwärmen des Grundkörpers des Aufnahmeabschnitts 7 einführbar ist. Bei dem hier dargestellten Ausführungsbeispiel des Spannfutters 1 weist der Aufnahmeabschnitt 7 ein Hydrodehnspannfutter auf, dessen Aufbau und Funktionsweise ebenfalls bekannt sind, sodass hier nicht näher darauf eingegangen wird. Die Innenfläche 15 der Ausnehmung 13 weist einen Innendurchmesser auf, der so auf den Außendurchmesser der Außenfläche 17 des Werkzeugs 9 beziehungsweise des zugehörigen Schafts 11 abgestimmt ist, dass das Werkzeug 9 durch das in der Stirnseite 19 des Spannfutters 1 vorgesehene offene Ende der Ausnehmung 13 in den Aufnahmeabschnitt 7 einführbar ist. Das Hydrodehnspannfutter 21 weist mindestens einen, einen Teil der Innenfläche 15 der Ausnehmung 13 bildenden elastischen Wandabschnitt 23 auf, der mit mindestens einem auf der der Ausnehmung 13 abgewandten Seite des Wandabschnitts 23 angeordneten Hohlraum 25 zusammenwirkt. In diesem ist ein Medium, vorzugsweise eine hydraulische Flüssigkeit, vorgesehen, die auf geeignete Weise mit Druck beaufschlagbar ist. Durch diesen Druck wird der elastische Wandabschnitt 23 in Richtung der Ausnehmung 13 gedrängt, sodass sich deren Innendurchmesser reduziert und ein in die Ausnehmung 13 eingesetztes Werkzeug sicher gehalten wird. Es ist bekannt, dass sich bei einem Hydrodehnspannfutter 21 der elastische Wandbereich 23 vorzugsweise vollständig um die Ausnehmung 13 herum erstreckt. Dies gilt auch für den Hohlraum 25.

Bei dem hier dargestellten Ausführungsbeispiel ist der Hohlraum 25 allerdings nicht vollständig um die Ausnehmung 13 umlaufend ausgebildet. In einem Bereich, in dem der Hohlraum 25 fehlt, ist bei dem hier dargestellten Spannfutter 1 eine Sicherungseinrichtung 27 vorgesehen, die mindestens einen Stift 29 aufweist, der entlang einer Linie, die senkrecht auf der Bildebene von Figur 1 steht, verläuft. Er schneidet die Ausnehmung 13. Er ist dabei so angeordnet, dass seine hier durch einen Punkt angedeutete Mittelachse 31 außerhalb der Ausnehmung 13 verläuft.

Figur 1 ist zu entnehmen, dass das Werkzeug 9, hier also dessen Schaft 11, eine Vertiefung 33 aufweist, deren Boden - zumindest im Bereich der Bildebene von Figur 1 - ebenfalls senkrecht zur Bildebene von Figur 1 verläuft und die zwei Begrenzungswände 37 und 39 aufweist, die einen sich nach außen öffnenden Winkel einschließen. Die Vertiefung 33 ist so angeordnet, dass der Stift 29 an der linken Begrenzungswand 39 der Vertiefung 33 einliegt, sodass das Werkzeug 9 in einer definierten Axialposition angeordnet ist.

Die Längsschnittdarstellung gemäß Figur 1 zeigt, dass das Spannfutter 1 eine Vorspanneinrichtung mit einem hier als Schraubenfeder 43 ausgebildeten Vorspannelement beziehungsweise Federelement aufweist. Die Vorspanneinrichtung 41 ist so ausgebildet, dass sich auf das Werkzeug 9 eine - in Figur 1 nach rechts gerichtete - Kraft beziehungsweise Vorspannkraft ausübt, welche versucht das Werkzeug 9 aus der Ausnehmung 13 heraus zu drängen. Dies wird allerdings durch den Stift 29 der Sicherungseinrichtung 27 verhindert, der an der linken Begrenzungswand 39 der Vertiefung 43 des Werkzeugs 9 beziehungsweise des Schafts 11 anliegt.

In der hier vorliegenden Querschnittdarstellung des Stifts 29 wird deutlich, dass dieser in seiner Umfangsfläche 45 eine Ausnehmung 47 aufweist, die in der in Figur 1 wiedergegebenen Drehstellung des Stifts 29 nach oben, das heißt auf der der Ausnehmung 13 abgewandten Seite des Stifts 29, angeordnet ist.

Der Stift 29 ist drehbar in dem Grundkörper des Spannfutters 1 gelagert. Die Drehbewegung kann über einen hier nicht dargestellten Betätigungsabschnitt bewirkt werden, der zumindest an einem Ende des Stifts 29 vorgesehen ist und beispielsweise einen quer zur Längserstreckung des Stifts 29 aufweisenden Schlitz oder aber eine in dessen Stirnseite eingebrachte Vertiefung umfasst. Die Vertiefung kann so ausgebildet sein, dass ein Inbusschlüssel oder ein Torx-Werkzeug dort eingreifen kann. Auf diese Weise kann der Stift 29 leicht verdreht werden, um in verschiedene Drehpositionen gedreht zu werden.

In Figur 1 befindet sich der Stift 29 in einer ersten Drehposition, in welcher er in die Ausnehmung 13 eingreift, also über deren Innenfläche 15 vorspringt. Auf diese Weise kann der Stift 29 in die Vertiefung 33 am Werkzeug 9 beziehungsweise an dessen Schaft 11 eingreifen.

Wird der Stift 29 um 180° gedreht, so liegt die Ausnehmung 47 auf der der Ausnehmung 13 zugewandten Seite des Stifts 29. Die Ausnehmung 47 ist vorzugsweise so ausgebildet, insbesondere bogenbesonders bevorzugt kreisbogenförmig gewölbt, dass sie an die Außenkontur des Werkzeugs 9 beziehungsweise des Schafts 11 angepasst ist. In dieser gegenüber Figur 1 um 180° gedrehten Stellung wird das Werkzeug 9 freigegeben und kann ungehindert aus der Ausnehmung 13 herausgenommen oder in diese eingebracht werden. Es muss allerdings um seine Längsachse so verdreht werden, dass dessen Vertiefung 33 sich in der Position befindet, in welcher der Stift 29 angeordnet ist. Sollten mehr als ein Stift vorgesehen sein, müsste das Werkzeug 9 auch mehrere Vertiefungen aufweisen.

Wird das Werkzeug 9 in die Ausnehmung 13 eingeschoben, so tritt es in Eingriff mit der Vorspanneinrichtung 41 und muss gegen dessen Vorspannkraft weiter in die Ausnehmung 13 eingeführt werden, bis der Stift 29 im Bereich der Vertiefung 33 angeordnet ist. Dann kann der Stift 29 in die in Figur 1 wiedergegebene Position verdreht werden, sodass er mit seiner Umfangsfläche 45 an der zweiten Begrenzungswand 39 der Vertiefung 33 anliegt, also an der Begrenzungswand, die näher an der Vorspanneinrichtung 41 liegt.

Statt des hier beschriebenen Stifts 29 kann auch ein feststehender, das heißt nicht drehbarer Stift verwendet werden, der ebenfalls senkrecht zu Bildebene von Figur 1 verläuft und an der Position des hier dargestellten Stifts 29 angeordnet ist. Er greift damit ebenfalls in die Ausnehmung 13 ein und kann in einer Vertiefung 33 des Werkzeugs 9 angeordnet werden. Zum erstmaligen Einschieben eines Werkzeugs 9 beziehungsweise bei einem Werkzeugwechsel muss ein derartiger Stift mit einem geeigneten Werkzeug aus dem Grundkörper des Spannfutters herausgedrückt werden, um das Werkzeug 9 freizugeben.

Anstelle eines derartigen Stifts kann auch eine den Aufnahmebereich 7 durchdringende Schraube verwendet werden, die so weit in den Aufnahmebereich 7 einschraubbar ist, dass deren Ende, wie hier der Stift 29, im Bereich der Vertiefung 33 angeordnet ist und - in axialer Richtung gesehen - als Anschlag für das Werkzeug 9 dient.

Unabhängig von der konkreten Ausgestaltung der Sicherungseinrichtung 27 dient diese dazu, das Werkzeug 9 in einer definierten Axialposition in der Ausnehmung 13 des Aufnahmeabschnitts 7 zu halten. Dabei wird das Werkzeug durch die Vorspanneinrichtung 41 gegen ein Sicherungselement der Sicherungseinrichtung 27, sei es gegen einen drehbaren Stift 29 oder andere Stifte beziehungsweise eine Schraube angedrückt. Dabei liegt die linke Begrenzungswand 39 an dem Sicherungselement an, sodass eine exakte, definierte Axialposition des Werkzeugs 9 im Aufnahmeabschnitt 7 gewährleistet ist.

Es ist nun möglich, durch Aktivierung des Hydrodehnspannfutters 21 das Werkzeug 9 an der erreichten Axialposition festzuspannen. Dabei dient die Sicherungseinrichtung 27 auch dazu, bei einer hohen Belastung des eingespannten Werkzeugs 9 zu verhindern, dass dieses aus dem Aufnahmeabschnitt 7 herausgezogen wird.

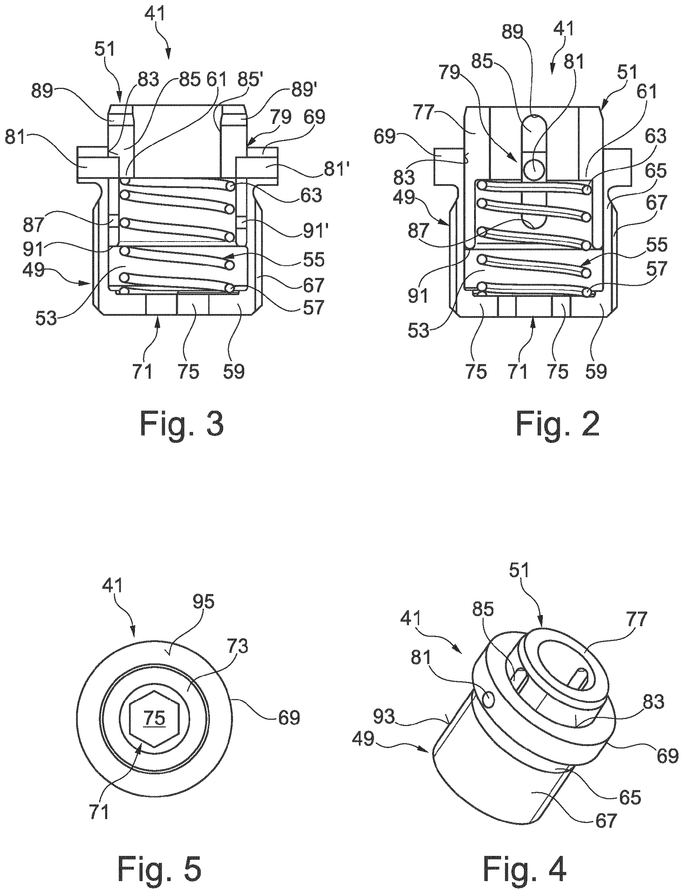

Figur 2 zeigt in Vergrößerung die in Figur 1 dargestellte und angesprochene Vorspanneinrichtung 41 des Spannfutters 1 im Längsschnitt. Gleiche und funktionsgleiche Elemente sind mit gleichen Bezugszeichen versehen, sodass insofern auf die vorangegangene Beschreibung verwiesen wird.

Erkennbar ist hier, dass die Vorspanneinrichtung ein erstes Gehäuseelement 49 und ein zweites Gehäuseelement 51 aufweist, welches in das erste Gehäuseelement 49 einsetzbar und gegenüber diesem verschieblich ist. Die beiden Gehäuseelemente 49 und 51 schließen einen Hohlraum 53 ein, in welchem ein Federelement, vorzugsweise eine Schraubenfeder 55 eingesetzt ist. Diese ist unter Vorspannung in den Hohlraum 53 eingebracht und stützt sich mit ihrem ersten Ende an einem am ersten Gehäuseelement 49 vorgesehenen Widerlager 59 ab, welches in den Hohlraum 53 vorspringt. Das zweite Gehäuseelement 51 weist ebenfalls ein Widerlager 61 auf, an dem das zweite Ende 63 der Schraubenfeder 55 anliegt.

Aus Figur 2 ist ersichtlich, dass das erste Gehäuseelement 49 einen rohrförmigen, vorzugsweise zylindrischen Wandabschnitt 65 aufweist, welcher den Hohlraum 53 umgibt und welcher das Widerlager 59 umfasst. Auf der Außenseite des Wandabschnitts 65 ist ein Außengewinde 67 vorgesehen, welches mit einem Innengewinde im Spannfutter zusammenwirkt, sodass die Vorspanneinrichtung 41 dort gehalten wird.

Der erste Wandabschnitt weist außerdem einen umlaufenden Kragen 69 auf, dessen Außendurchmesser größer ist als der des Wandabschnitts 65, und der daher als axialer Anschlag für das erste Gehäuseelement 49 dient, wenn dieses in das Spannfutter 1 eingeschraubt wird.

Das erste Gehäuseelement 49 weist an seinem dem Kragen abgewandten Ende einen Betätigungsbereich 71 auf, der durch eine in einen Boden 73 des ersten Wandabschnitts 49 eingebrachte Ausnehmung 75 realisiert wird. Denkbar ist es, einen quer zur Längserstreckung der Vorspanneinrichtung 41 verlaufenden Schlitz vorzusehen, oder aber eine Ausnehmung 75, deren Innenkontur so ausgebildet ist, dass dort ein Inbusschlüssel oder ein Torx-Werkzeug einführbar ist, mit dessen Hilfe ein Drehmoment auf die Vorspanneinrichtung 41 ausübbar ist, um dieses im Spannfutter 1 festzuschrauben, bis der Kragen 69 am Grundkörper des Spannfutters 1 anschlägt.

Die Ausnehmung 75 kann den Boden 73 durchdringen. Dieser kann aber auch so dick ausgebildet sein, dass die Ausnehmung 75 quasi als Sackloch ausgebildet ist.

Auch das zweite Gehäuseelement weist einen Grundkörper mit einem ringförmigen, vorzugsweise zylindrischen Wandabschnitt 77 auf, an welchem das Widerlager 61 ausgebildet wird, hier beispielhaft durch eine Schulter, die dadurch realisiert wird, dass der Wandabschnitt 77 Bereiche unterschiedlicher Dicke umfasst.

Der Wandabschnitt 77 des zweiten Gehäuseelements 51 kann zumindest bereichsweise in den vom Wandabschnitt 65 des ersten Gehäuseelements 49 umgebenden Hohlraum 53 eingeführt werden.

Die Vorspanneinrichtung 41 weist eine Sperreinrichtung 79 auf, welche eine ungewollte Trennung der beiden Gehäuseelemente 49 und 51 verhindert. Bei dem hier dargestellten Ausführungsbeispiel umfasst die Sperreinrichtung mindestens einen Stift 81, der in der Darstellung gemäß Figur 2 senkrecht zur Bildebene verläuft und in den Kragen 69 des ersten Gehäuseelements 49 eingesetzt ist. Er ragt aus der Innenfläche 83 des Kragens 69 in Richtung auf den Betrachter von Figur 2 hervor und reicht in einen in den Wandabschnitt 77 des zweiten Gehäuseelements 51 eingebrachten in Richtung der Längserstreckung des zweiten Gehäuseelements 51, beziehungsweise in Richtung der Vorspannkraft verlaufenden Schlitz 85, welcher der Sperreinrichtung 79 zuzuordnen ist. Durch die Länge des Schlitzes 85 kann sowohl die Einwärtsbewegung des zweiten Gehäuseelements 51 in das erste Gehäuseelement 49 begrenzt werden, als auch die entgegengesetzte Richtung aus dem ersten Gehäuseelement 49 heraus, die durch die Schraubenfeder 55 bewirkt wird. Die Einwärtsbewegung endet, sobald der Stift 51 an dem unteren Ende 87 des Schlitzes 85 anschlägt. Denkbar ist es auch, die Einwärtsbewegung des zweiten Gehäuseelements 51 dadurch zu begrenzen, dass dessen unterer Rand 91 an einem Vorsprung des Wandabschnitts 65 des ersten Gehäuseelements 49 anschlägt, hier am Widerlager 59 für das erste Ende 57 der Schraubenfeder 55. Die Auswärtsbewegung des zweiten Gehäuseelements 51 in das erste Gehäuseelement 49 kann, wie gesagt, durch den Stift 81 begrenzt werden, sobald dieser an das obere Ende 89 des Schlitzes 85 anschlägt.

Figur 3 zeigt die Vorspanneinrichtung 41 wiederum im Längsschnitt, allerdings ist die Vorspanneinrichtung hier gegenüber der Darstellung in Figur 2 um 90° gedreht. Gleiche und funktionsgleiche Elemente sind mit gleichen Bezugszeichen versehen, sodass insofern auf die vorangegangene Beschreibung verwiesen wird.

Aus der Darstellung gemäß Figur 3 ist ersichtlich, dass die Sperreinrichtung 79 hier zwei Stifte 81 und 81' aufweist, die den Kragen 69 in radialer Richtung durchdringen und bis in Schlitze 85 und 85' ragen, die in dem Wandabschnitt 77 des zweiten Gehäuseelements 51 vorgesehen sind. Hier sind die oberen Enden 89 und 89' der identisch ausgebildeten Schlitze 85 und 85' zu erkennen, außerdem die unteren Enden 91 und 91'.

Grundsätzlich ist es möglich, statt der beiden identischen Stifte 81 und 81' einen durchgehenden Stift zu verwenden, der auch gleichzeitig als Anschlag für das als Schraubenfeder 55 ausgebildete Federelement dient. Vorzugsweise ist jedoch vorgesehen, dass das Widerlager 61 am Wandabschnitt 77 des zweiten Gehäuseelements 51 als ringförmige Schulter ausgebildet ist, um eine sichere, vorzugsweise umlaufende Anlage für das zweite Ende 63 der Schraubenfeder 55 zu gewährleisten.

Figur 4 zeigt die anhand der Figuren 2 und 3 erläuterte Vorspanneinrichtung 41 in perspektivischer Darstellung. Gleiche und funktionsgleiche Elemente sind mit gleichen Bezugszeichen versehen, sodass insofern auf die vorangegangene Beschreibung verwiesen wird.

Deutlich erkennbar ist, dass die Vorspanneinrichtung 41 als Ganzes im Wesentlichen zylindrisch ausgebildet ist und dass das erste Gehäuseelement 49 das zweite Gehäuseelement 51 rundum umgibt und aufnimmt. Auf der Außenseite des ersten Gehäuseelements 49 ist das Außengewinde 67 ausgebildet. Deutlich erkennbar ist der gegenüber der Umfangsfläche 93 des ersten Gehäuseelements 49 radial vorspringende Kragen 69, in den der mindestens eine Stift 81 eingesetzt ist. Hier ist einer der beiden Stifte 81 und 81' erkennbar, hier der Stift 81. Dieser ragt über die Innenfläche 83 des Kragens nach innen in den Schlitz 85 im Wandabschnitt 77 des zweiten Gehäuseelements 51.

Schließlich zeigt Figur 5 eine Unteransicht der hier beschriebenen Vorspanneinrichtung 41. Gleiche und funktionsgleiche Elemente sind mit gleichen Bezugszeichen versehen, sodass insofern auf die vorangegangene Beschreibung verwiesen wird.

Deutlich erkennbar ist hier der Boden 73 mit dem die Ausnehmung 75 umfassenden Betätigungsbereich 71. Auch ist die eine Ringfläche bildende Unterseite 95 des Kragens 69 zu erkennen, mit welcher die Vorspanneinrichtung 41 am Grundkörper des Spannfutters 1 anliegt, wenn diese in eine entsprechende Bohrung mit einem Innengewinde eingeschraubt ist. Durch diese Anlage wird eine exakte, vordefinierte axiale Position der Vorspanneinrichtung 41 ins Spannfutter 1 gewährleistet.

Insgesamt zeigt sich, dass die Vorspanneinrichtung 41 sehr einfach ausgebildet ist, und dass das als Schraubenfeder 55 ausgebildete Federelement der Vorspanneinrichtung 41 sicher in einem Hohlraum 53 angeordnet ist, sodass eine Beschädigung des Federelements insbesondere bei einer Verdrehung des Werkzeugs 9 gegenüber der Vorspanneinrichtung 41 sicher vermieden wird.

Sollte ein Schaden an der Vorspanneinrichtung 41 auftreten, so ist diese sehr leicht austauschbar. Sie wird ohne weiteres aus dem Spannfutter 1 ausgeschraubt und kann durch ein neues ersetzt werden.

Darüber hinaus können Vorspanneinrichtungen 41 mit verschiedener Länge und auch mit verschiedenen Federelementen realisiert werden, die sich beispielsweise durch unterschiedliche Federeigenschaften auszeichnen. Überdies ist es einfach möglich, eine Vorspanneinrichtung 41 der hier dargestellten Art mit verschiedenen Außendurchmessern zu realisieren und damit an verschiedene Größen von Spannfuttern 1 anzupassen.

Die Vorspanneinrichtung 41 ist damit variabel einsetzbar und trotz allem kostengünstig.

## Patentansprüche

1. Spannfutter (1) mit
- einem Kupplungsabschnitt (3),
- einem eine Ausnehmung (13) aufweisenden Aufnahmeabschnitt (7), welcher der Aufnahme eines Werkzeugs (9) dient, wobei das Werkzeug (9) in die Ausnehmung (13) einsetzbar ist,
- einer Sicherungseinrichtung (27) zur axialen Festlegung des Werkzeugs (9) im Aufnahmeabschnitt (7) und mit
- einer Vorspanneinrichtung (41), welche das in den Aufnahmeabschnitt (7) eingesetzte Werkzeug (9) mit einer axialen Kraft beaufschlagt, wobei
- die Vorspanneinrichtung (41) ein erstes Gehäuseelement (49) und ein in das erste Gehäuseelement (49) einsetzbares und gegenüber diesem verschiebliches zweites Gehäuseelement (51) aufweist, wobei
- die Gehäuseelemente (49,51) einen ein Federelement (55) aufnehmenden Hohlraum (53) umgrenzen,
- wobei das Federelement (55) eine die beiden Gehäuseelemente (49,51) auseinanderdrängende Vorspannkraft erzeugt und
- wobei eine Sperreinrichtung (79) eine ungewollte Trennung der Gehäuseelemente (49,51) verhindert,
**dadurch gekennzeichnet, dass**
- die Vorspanneinrichtung (41) in die Ausnehmung (13) einschraubbar ist.

2. Spannfutter nach Anspruch 1, **dadurch gekennzeichnet, dass** das erste Gehäuseelement (49) einen Grundkörper mit einem ringförmigen, vorzugsweise zylindrischen, Wandabschnitt (65) aufweist, der den Hohlraum (53) umgibt und mit einem nach innen vorspringenden Widerlager (59) für ein Ende des Federelements (55) versehen ist.

3. Spannfutter nach Anspruch 1 oder 2, **dadurch gekennzeichnet, dass** das erste Gehäuseelement (49) ein Außengewinde (67) aufweist.

4. Spannfutter nach einem der vorhergehenden Ansprüche, **dadurch gekennzeichnet, dass** das erste Gehäuseelement (49) einen umlaufenden Kragen (69) aufweist.

5. Spannfutter nach einem der vorhergehenden Ansprüche, **dadurch gekennzeichnet, dass** das erste Gehäuseelement (49) einen an einem ersten, insbesondere dem Kragen (69) abgewandten Ende des Gehäuseelements (49) vorgesehenen Betätigungsbereich (71) aufweist.

6. Spannfutter nach einem der vorhergehenden Ansprüche, **dadurch gekennzeichnet, dass** das zweite Gehäuseelement (51) einen Grundkörper mit einem ringförmigen, vorzugsweise zylindrischen, Wandabschnitt (77) aufweist, der zumindest bereichsweise in den vom Wandabschnitt (67) des ersten Gehäuseelements (49) umgebenden Hohlraum (53) einführbar ist und diesen umgibt, und der ein nach innen vorspringendes Widerlager (61) für ein zweites Ende (63) des Federelements (55) aufweist.

7. Spannfutter nach einem der vorhergehenden Ansprüche, **dadurch gekennzeichnet, dass** die Sperreinrichtung (79) mindestens einen zumindest die Wandabschnitte (67,77) der beiden Gehäuseelemente (49,51) durchdringenden Stift (81,81') aufweist, der in einem der Gehäuseelemente (49,51) in mindestens einer Bohrung eingebracht ist, und der in mindestens einem in dem anderen der Gehäuseelemente verlaufenden Schlitz (85) gelagert ist, wobei der Schlitz (85) in Richtung der von dem Federelement (55) ausgeübten Vorspannkraft verläuft und einen mit dem mindestens einen Stift (81,81') zusammenwirkenden Anschlag aufweist, um die Relativbewegung der beiden Gehäuseelemente (49,51) zueinander zu begrenzen und die ungewollte Trennung der Gehäuseelemente (49,51) zu verhindern.

8. Spannfutter nach einem der vorhergehenden Ansprüche, **dadurch gekennzeichnet, dass** der Betätigungsbereich (71) als in einen Boden (73) des ersten Gehäuseelements (49) eingebrachte Ausnehmung ausgebildet und eingerichtet ist, um ein Drehmoment auf die Vorspanneinrichtung (41) auszuüben, um diese mit dem Außengewinde (67) im Spannfutter (1) festzuschrauben, bis der Kragen (69) an einem Grundkörper des Spannfutters (1) anschlägt.

## Claims

1. Clamping chuck (1) with
- a coupling portion (3),
- a receiving portion (7) which has a recess (13) and serves to receive a tool (9), wherein the tool (9) can be inserted into the recess (13),
- a securing device (27) for the axial fixing of the tool (9) in the receiving portion (7) and with
- a pretensioning device (41) which applies an axial force to the tool (9) inserted into the receiving portion (7), wherein
- the pretensioning device (41) has a first housing element (49) and a second housing element (51) which can be inserted into the first housing element (49) and is displaceable in respect thereof, wherein
- the housing elements (49, 51) delimit a cavity (53) accommodating a spring element (55),
- wherein the spring element (55) generates a pretensioning force pushing apart the two housing elements (49, 51) and
- wherein a blocking device (79) prevents the unintended separation of the housing elements (49, 51),
**characterised in that**
- the pretensioning device (41) can be screwed into the recess (13).

2. Clamping chuck according to claim 1, **characterised in that** the first housing element (49) has a base body with an annular, preferably cylindrical, wall portion (65) which surrounds the cavity (53) and is provided with an abutment (59) protruding inwards for an end of the spring element (55).

3. Clamping chuck according to claim 1 or 2, **characterised in that** the first housing element (49) has an external thread (67).

4. Clamping chuck according to any one of the preceding claims, **characterised in that** the first housing element (49) has a peripheral collar (69).

5. Clamping chuck according to any one of the preceding claims, **characterised in that** the first housing element (49) has an operating region (71) at a first end, in particular the end of the housing element (49) facing away from the collar (69).

6. Clamping chuck according to any one of the preceding claims, **characterised in that** the second housing element (51) has a base body with an annular, preferably cylindrical, wall portion (77) which, at least regionally, can be inserted into the cavity (53) surrounded by the wall portion (67) of the first housing element (49), and surrounds it, and which has an inwardly protruding abutment (61) for a second end (63) of the spring element (55).

7. Clamping chuck according to any one of the preceding claims, **characterised in that** the blocking device (79) has at least one pin (81, 81') penetrating at least the wall portions (67, 77) of the two housing elements (49, 51), which is placed in one of the housing elements (49, 51) in at least one bore, and which is mounted in at least one slot (85) running in the other of the housing elements, wherein the slot (85) runs in the direction of the pretensioning force exerted by the spring element (55) and has a stop cooperating with the at least one pin (81, 81') in order to limit the relative movement of the two housing elements (49, 51) towards one another and to prevent the unintended separation of the housing elements (49, 51).

8. Clamping chuck according to any one of the preceding claims, **characterised in that** the operating region (71) is constructed as a recess positioned in a floor (73) of the first housing element (49) and is constructed in order to exert a torque on the pretensioning device (41) in order to screw-tighten it by means of the external thread (67) in the clamping chuck (1) until the collar (69) stops against a base body of the clamping chuck (1).

## Revendications

1. Mandrin (1) comportant :
- une section d'accouplement (3),
- une section de logement (7) présentant un évidement (13), lequel sert au logement d'un outil (9), dans lequel l'outil (9) est insérable dans l'évidement (13),
- un moyen d'arrêt (27) destiné à la fixation axiale de l'outil (9) dans la section de logement (7) et doté
- d'un moyen de précontrainte (41), lequel applique une force axiale sur l'outil (9) inséré dans la section de logement (7), dans lequel
- le moyen de précontrainte (41) présente un premier élément de boîtier (49) et un deuxième élément de boîtier (51) insérable dans le premier élément de boîtier (49) et coulissant par rapport à celui-ci, dans lequel
- les éléments de boîtier (49, 51) délimitent une cavité (53) logeant un élément élastique (55),
- dans lequel l'élément élastique (55) génère une force de précontrainte écartant l'un de l'autre les deux éléments de boîtier (49, 51) et
- dans lequel un moyen de blocage (79) empêche une séparation intempestive des éléments de boîtier (49, 51),
**caractérisé en ce que**
- le moyen de précontrainte (41) est vissable dans l'évidement (13).

2. Mandrin selon la revendication 1, **caractérisé en ce que** le premier élément de boîtier (49) présentant un corps de base doté d'une section de paroi (65) annulaire, de préférence cylindrique, laquelle entoure la cavité (53) et est prévue avec un contre-appui (59) saillant vers l'intérieur pour une extrémité de l'élément élastique (55).

3. Mandrin selon la revendication 1 ou 2, **caractérisé en ce que** le premier élément de boîtier (49) présente un filetage extérieur (67).

4. Mandrin selon l'une des revendications ci-dessus, **caractérisé en ce que** le premier élément de boîtier (49) présente une collerette périphérique (69).

5. Mandrin selon l'une des revendications ci-dessus, **caractérisé en ce que** le premier élément de boîtier (49) présente une zone d'actionnement (71) prévue à une première extrémité de l'élément de boîtier (49), en particulier une extrémité se détournant de la collerette (69).

6. Mandrin selon l'une des revendications ci-dessus, **caractérisé en ce que** le deuxième élément de boîtier (51) présente un corps de base doté d'une section de paroi (77) annulaire, de préférence cylindrique, laquelle est insérable au moins par sections dans la cavité (53) entourée par la section de paroi (67) du premier élément de boîtier (49) et entoure celui-ci, et comporte un contre-appui (61) saillant vers l'intérieur pour une deuxième extrémité (63) de l'élément élastique (55).

7. Mandrin selon l'une des revendications ci-dessus, **caractérisé en ce que** le moyen de blocage (79) comporte au moins une tige (81, 81') traversant au moins les sections de paroi (67, 77) des deux éléments de boîtier (49, 51), laquelle est introduite dans un des éléments de boîtier (49, 51) dans au moins un alésage, et laquelle est montée dans au moins une fente (85) s'étendant dans l'autre des éléments de boîtier, dans lequel la fente (85) s'étend dans la direction de la force de précontrainte exercée par l'élément élastique (55) et présente une butée coopérant avec l'au moins une tige (81, 81'), afin de limiter le mouvement relatif des deux éléments de boîtier (49, 51) l'un par rapport à l'autre et d'empêcher la séparation intempestive des éléments de boîtier (49, 51).

8. Mandrin selon l'une des revendications ci-dessus, **caractérisé en ce que** la zone d'actionnement (71) est conçue comme évidement réalisé dans un fond (73) du premier élément de boîtier (49, 51) et adaptée pour exercer un couple de rotation sur le moyen de précontrainte (41), afin de fixer celui-ci par vissage dans le mandrin (1) avec le filetage extérieur (67), jusqu'à ce que la collerette (69) bute sur un corps de base du mandrin (1).
